## Europäisches Patentamt

## European Patent Office

## Office européen des brevets

(19)

(11) Veröffentlichungsnummer: **0 119 522**
**A1**

(12) **EUROPÄISCHE PATENTANMELDUNG**

(21) Anmeldenummer: **84102172.8**

(22) Anmeldetag: **01.03.84**

(51) Int. Cl.³: **B 65 G 47/52**

(30) Priorität: **15.03.83 DE 3309107**
**18.03.83 DE 3309740**

(43) Veröffentlichungstag der Anmeldung: **26.09.84**
**Patentblatt 84/39**

(84) Benannte Vertragsstaaten: **AT BE CH DE FR GB IT LI LU NL SE**

(71) Anmelder: **Maschinen- und Stahlbau Julius Lippert GmbH & Co., Höttgerstrasse 46, D-8487 Pressath (DE)**

(72) Erfinder: **Sper, Gerold, Ing. grad., Ulmenweg 6, D-8481 Parkstein (DE)**

(74) Vertreter: **LOUIS, PÖHLAU, LOHRENTZ & SEGETH, Kesslerplatz 1, D-8500 Nürnberg (DE)**

(54) **Vorrichtung zum Füllen und Entleeren von Kapseln für keramisches Gut sowie zum gleichzeitigen Stapeln und Entstapeln der Kapseln.**

(57) Bei einer Vorrichtung zum Füllen und Entleeren von Kapseln für keramisches Gut sowie zum gleichzeitigen Stapeln und Entstapeln der Kapseln ist der Kapselstapel mit gebranntem Gut mit dem Kapselstapel mit zu brennendem Gut über ein Förderband verbunden, wobei ein Greiferkopf Kapseln mit zu brennendem Gut zum entsprechenden Kapselstapel fördert und ein anderer Greiferkopf vom Kapselstapel mit gebranntem Gut Kapseln mit gebranntem Gut zum Förderband fördert, die Kapseln dort absetzt und von dem Förderband das gebrannte Gut weiter zu einer Abführstation fördert.

ACTORUM AG

Vorichtung zum Füllen und Entleeren' von
Kapseln für keramisches Gut sowie zum gleichzeitigen Stapeln und Entstapeln der Kapseln

---

Die Erfindung betrifft eine Vorrichtung zum Füllen und Entleeren von Kapseln für keramisches Gut sowie zum gleichzeitigen Stapeln und Entstapeln der Kapseln, bei der ein Kapselstapel mit gebranntem Gut sowie ein Kapselstapel mit zu brennendem Gut jeweils auf einem taktweise zur Konstanthaltung der Höhenlage der jeweils obersten Kapseln heb- bzw. senkbaren Hebebühne angeordnet sind und welche eine die beiden Hebebühnen verbindende Umsetzvorrichtung zur Umsetzung der Kapseln vom Stapel mit gebranntem Gut zum Stapel mit zu brennendem Gut sowie eine erste Fördervorrichtung zur Förderung des zu brennenden Gutes von einer Zuführstation zum entsprechenden Kapselstapel und eine zweite Fördervorrichtung zur Förderung des gebrannten Gutes vom entsprechenden Kapselstapel zu einer Abführstation umfaßt, wobei die Fördervorrichtungen mindestens je einen heb- und senkbaren Greiferkopf aufweisen und die Zuführ- und Abführstationen etwa in Höhe der obersten Kapsel eines Stapels angeordnet sind.

Eine Vorrichtung dieser Art ist beispielsweise durch das deutsche Patent 2 733 016 bekannt. Bei dieser bekannten Vorrichtung sind die Zuführeinrichtung, die beiden Hebebühnen und die Abführeinrichtung in einer Linie aufeinanderfolgend angeordnet und ist eine die Zuführeinrichtung, die beiden Hebebühnen und die Abführeinrichtung überspannende Führung vorgesehen, entlang der ein Träger für die Umsetzvorrichtung und die beiden Fördervorrichtungen zwischen einer ersten Position, in der sich die Umsetzvorrichtung über den Kapselstapel mit zu brennendem Gut, die erste Fördervorrichtung über der Zuführeinrichtung und die zweite Fördervorrichtung über dem Kapselstapel mit gebranntem Gut befindet, und einer zweiten Position, in der sich die Umsetzvorrichtung über dem Kapselstapel mit gebranntem Gut, die erste Fördervorrichtung über dem Kapselstapel mit zu brennendem Gut und die zweite Fördervorrichtung über der Abführeinrichtung befindet, verschieblich.

Bei der bekannten Vorrichtung müssen komplizierte mechanische Bewegungen ausgeführt werden, wodurch die Maschine teuer wird. Vor allen Dingen aber ist ein Zugriff zu den Kapseln beim Umsetzen von einem Stapel zum anderen - beispielsweise für den Austausch von beschädigten Kapseln oder zum Reinigen der Kapseln - nicht möglich.

Der Erfindung liegt daher die Aufgabe zugrunde, eine Vorrichtung der eingangs angesprochenen Art derart auszugestalten, daß sie konstruktiv einfacher wird und einen Zugriff zu den Kapseln beim Umsetzen von einem Stapel zum anderen Stapel gestattet.

Diese Aufgabe wird erfindungsgemäß dadurch gelöst, daß die Umsetzvorrichtung ein Förderband oder dergleichen umfaßt und daß der Greiferkopf der ersten Fördervorrichtung von der Umsetzvorrichtung mit zu brennendem Gut gefüllte Kapseln zum entsprechenden Kapselstapel fördert und der Greiferkopf der zweiten Fördervorrichtung vom Kapselstapel mit gebranntem Gut Kapseln mit gebranntem Gut zur Umsetzvorrichtung fördert, die Kapseln dort absetzt und von der Umsetzvorrichtung das gebrannte Gut weiter zur Abführstation fördert.

Die erfindungsgemäße Vorrichtung erfordert in konstruktiver Hinsicht einen vergleichsweise geringen Aufwand und hat den Vorteil, daß die leeren Kapseln auf dem Förderband der Umsetzvorrichtung während des Betriebes der Anlage zugänglich sind, so daß sie jederzeit von Hand in einer ungefährlichen Weise ausgetauscht werden können und/oder einer Kapselputzmaschine zugeführt werden können.

Für einen vollautomatischen Betrieb wird man die Zuführstation in Förderrichtung der ersten Fördereinrichtung vor der Umsetzvorrichtung vorsehen, so daß der Greiferkopf der ersten Fördereinrichtung zuerst das zu brennende Gut von der Zuführstation zur Umsetzvorrichtung fördert und dort in eine leere Kapsel einsetzt und dann die Kapsel mit dem zu brennenden Gut zum entsprechenden Stapel fördert.

Sollen jedoch die Kapseln manuell zugeführt werden, so wird man die Zuführstation an der Umsetzvorrichtung selbst vorsehen. Mit anderen Worten, wird eine Bedienungsperson das zu brennende Gut von Hand in die auf dem Förderband der Umsetzvorrichtung geförderten leeren Kapseln einsetzen.

Zweckmäßigerweise sind mehrere heb- und senkbare Greiferköpfe an den Armen von im Takt der Hebebühnen um vertikale Achsen rotierenden Greifersternen angeordnet, so daß eine Hin- und Herbewegung des Greiferkopfes, die Zeit kostet, vermieden wird.

Vorteilhafterweise ist an jeder Hebebühne eine taktweise angetriebene Speicher- und Transportvorrichtung, vorzugsweise mit einer in sich geschlossenen Förderbahn, vorgesehen, auf der mehrere Stapel gleichzeitig gespeichert und nacheinander über die Hebebühne transportierbar sind. Eine derartige Speicher- und Transportvorrichtung ist platzsparend und kann bequem be- bzw. entladen werden. Für die Lade- und Entladevorgänge bleibt genügend zeitlicher Spielraum.

Eine Speicher- und Transportvorrichtung der oben genannten Art weist einen ringförmigen Drehtisch mit Durchbrechungen in der Tischplatte auf an den Stellen, an denen die Stapel zu liegen kommen, wobei die stationär angeordnete Hebebühne beim Anheben oder Absetzen durch die Durchbrechungen im Drehtisch hindurchgreifen kann. Für eine derartige Speicher- und Transportvorrichtung wird ein selbständiger Schutz beansprucht.

In weiterer Ausbildung dieser Speicher- und Transportvorrichtung können über den Durchbrechungen auf

0119522

die Tischplatte ortsgenau absetzbare Paletten zur Aufnahme der Stapel vorgesehen sein, wobei die Paletten eine verstellbare Zentriereinrichtung für die Stapel aufweisen.

Ein für die eingangs genannte Vorrichtung geeigneter Greiferkopf mit mindestens drei in etwa gleichem Winkelabstand voneinander angeordneten, an die Mantelfläche der Kapsel anlegbaren Greifgliedern, wie er beispielsweise aus den deutschen Patenten 26 54 445 oder 27 54 617 bekannt ist, weist etwa in der Mitte des Greiferkopfes ein auf und ab verschiebbares, an das keramische Gut in der Kapsel anlegbares Halteglied auf. Dieses Halteglied sorgt dafür, daß das keramische Gut fest in der Kapsel liegt, so daß bei den hohen Beschleunigungskräften, die bei Beginn und Ende eines jeden Förderschrittes auftreten, Verschiebungen oder gar ein Herausfallen des keramischen Gutes aus der Kapsel vermieden werden.

Zweckmäßigerweise liegt das Halteglied federnd auf dem keramischen Gut auf.

Um das keramische Gut allein ohne die Kapsel festhalten zu können, umfaßt in weiterer Ausführung der Erfindung das Halteglied einen Saugkopf, wie er an sich bekannt ist. Die Steuerung des Saugkopfes ist natürlich bei der erfindungsgemäßen Vorrichtung getrennt von der Steuerung der Greifglieder für die Kapsel. Für die erfindungsgemäße Ausbildung des Greiferkopfes wird ebenfalls ein selbständiger Schutz beansprucht.

Weitere Vorteile, Einzelheiten und Merkmale der Erfindung ergeben sich aus der nachstehenden, anhand der beiliegenden Zeichnung erfolgenden Beschreibung eines bevorzugten Ausführungsbeispiels. In der Zeichnung stellen dar:

Fig. 1    schematisch eine Draufsicht auf eine erfindungsgemäße Vorrichtung zum Füllen und Entleeren von Kapseln sowie zum gleichzeitigen Stapeln und Entstapeln der Kapseln,

Fig. 2    eine Seitenansicht eines Greiferkopfes gemäß der Erfindung für die Vorrichtung gemäß Fig.1, teilweise im Schnitt,

Fig. 3    eine Draufsicht auf den Greiferkopf der Fig. 2,

Fig. 4    eine Seitenansicht, teilweise im Schnitt, eines sog. Rundspeichers gemäß der Erfindung für eine Vorrichtung gemäß Fig. 1 und

Fig. 5    eine Draufsicht auf den Rundspeicher der Fig. 4.

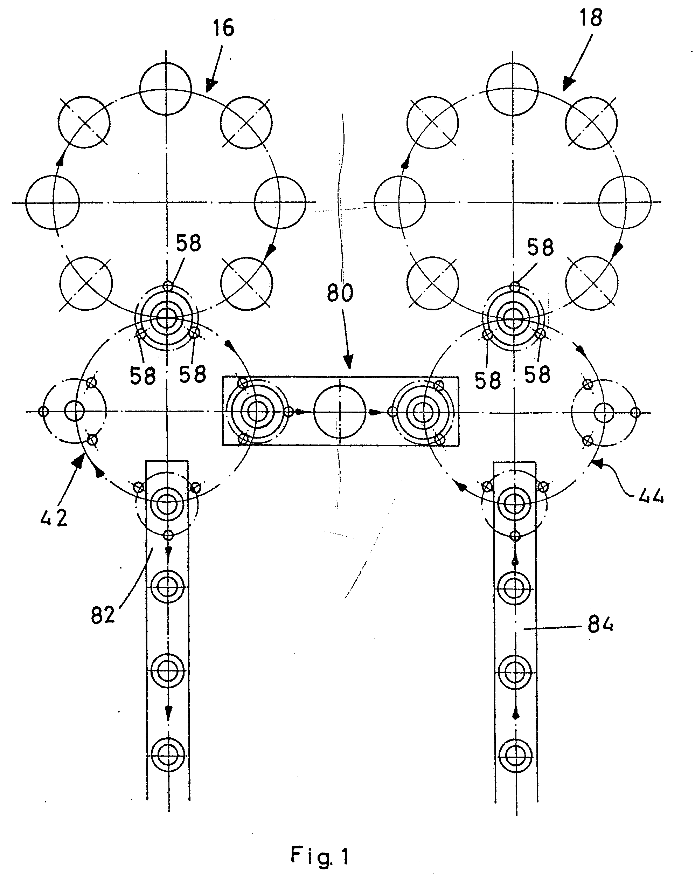

Die in Fig. 1 gezeigte Vorrichtung weist einen sog. Rundspeicher 16 für die Kapselstapel mit gebranntem Gut und einen Rundspeicher 18 für die Kapselstapel mit zu brennendem Gut auf. Die Rundspeicher werden bedient, d.h. be- und entladen, mit Hilfe einer nicht gezeigten Hängekrananlage und mit Hilfe von auf Gleisen verschiebbaren Wägen, auf denen die
Kapselstapel mit gebranntem und zu brennendem Gut
herangeführt und abgeführt werden. Die Rundspeicher
werden in Pfeilrichtung taktweise angetrieben, wobei bei jedem Taktschritt der Winkelabstand zwischen
zwei benachbarten Kapselstapelplätzen zurückgelegt
wird. Die Kapselstapelplätze, die gleichmäßig voneinander beabstandet sind, sind in Fig. 1 durch
Kreise veranschaulicht. Auf den Rundspeicher 16
werden Kapselstapel mit gebranntem Gut aufgegeben,
die in Fig. 1 von rechts her an eine später noch beschriebene Greiferkopfanordnung herangeführt werden,
während leere, zur Aufnahme nachfolgender Kapselstapel mit gebranntem Gut bereite Kapselstapelplätze nach links die Greiferkopfanordnung verlassen. Beim Rundspeicher 18 liegen die Verhältnisse umgekehrt. Dort verlassen die später beschriebene Greiferkopfanordnung in Fig. 1 nach links Kapselstapel mit zu brennendem Gut, die irgendwann im
Verlauf einer vollständigen Umdrehung - ähnlich wie
es beim Rundspeicher 16 möglich ist - vom Rundspeicher 18 entnommen werden mit Hilfe der Hängekrananlage, während von rechts her freie Kapselstapelplätze der Greiferkopfanordnung zugeführt werden.

Die Rundspeicher 16 und 18, die als eine Speicher-
und Transporteinrichtung für die Kapselstapel wirken, arbeiten jeweils mit einer stationären Hebebühne zusammen, die dafür sorgt, daß die Höhenlage
der jeweils obersten Kapsel eines Stapels, der sich
unter der Greiferkopfanordnung befindet, konstant
bleibt, so daß der Greiferkopf die Kapseln immer
in gleicher Höhe erfaßt.

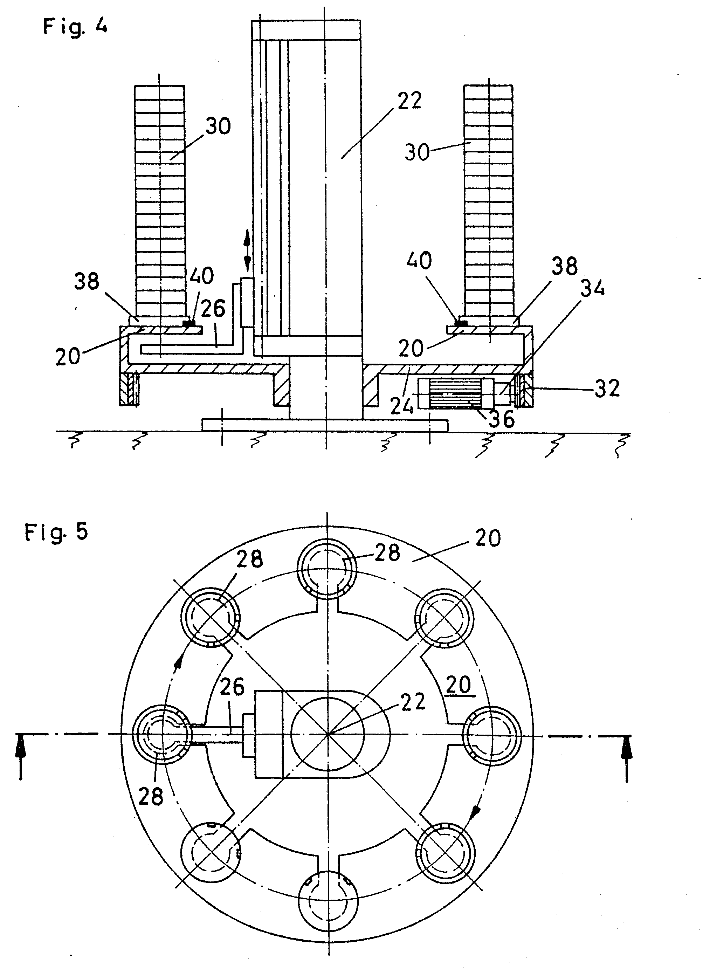

Ein Rundspeicher mit einer Hebebühne ist in den Fig. 4 und 5 gezeigt. Wie aus den Fig. 4 und 5 hervorgeht, weist der Rundspeicher oder Drehtisch eine ringförmige Tischplatte 20 auf, die um eine vertikale Achse 22 drehbar ist. Der Drehtisch hat sozusagen einen doppelten Boden, wie das aus Fig. 4 hervorgeht, wobei der obere Boden eben von der ringförmigen Tischplatte 20 gebildet ist, während der untere Boden von einer sich bis an die vertikale Achse 22 heranstreckenden und an ihr gelagerten Scheibe 24 gebildet wird. Der doppelte Boden ist auf der zur Achse 22 hin zugewandten Seite durchgehend offen, so daß eine an der vertikalen Achse 22 nach oben und unten verschiebbare, jedoch drehfest angeordnete Hebebühne 26 mit ihrem Ausleger zwischen die ringförmige Tischplatte 20 und die Scheibe 24 wie gezeigt greifen kann. Die ringförmige Tischplatte 20 weist dem Umriß des Auslegers der Hebebühne 26 angepaßte und in der Regel gleichmäßig voneinander beabstandete Durchbrechungen 28 auf, die aus Fig. 5 ersichtlich sind. Durch diese Durchbrechungen 28 hindurch kann die Hebebühne 26 zum Anheben oder Absenken eines Kapselstapels greifen, wenn dieser über einer Durchbrechung 28 liegend über die Hebebühne 26 durch Drehung des Drehtisches derart verfahren worden ist, daß die Durchbrechung 28 mit der Hebebühne 26 fluchtet. Gedreht wird der Drehtisch mit Hilfe eines Zahnkranzes 32, der an der Unterseite der Scheibe 24 vorgesehen ist und in den ein Zahnrad 34 eines Gleichstrommotors 36 eingreift.

- 8 -          0119522

Wie man aus Fig. 4 entnehmen kann, sind die Kapselstapel 30 über Paletten 38 auf der ringförmigen Tischplatte 20 abgestützt, die mit Hilfe von Zapfen und Augen (nicht gezeigt) ortsgenau auf der ringförmigen Tischplatte 20 positioniert werden können. Die Hebebühne 26 greift daher nicht unmittelbar am Boden einer Kapsel an, so daß die Kapseln geschont werden. Ferner weisen die Paletten 38 verstellbare Zentriereinrichtungen 40 in Form von Anschlägen auf, so daß die Kapselstapel 30 positionsgenau über den Durchbrechungen 28 mit Hilfe der Hängekrananlage 14 abgesetzt werden können. Falls die Verstellmöglichkeit der Zentriereinrichtungen 40 nicht genügt, können auch die Paletten 38 insgesamt gegen andere zur Anpassung an die jeweiligen Kapselgrößen ausgetauscht werden.

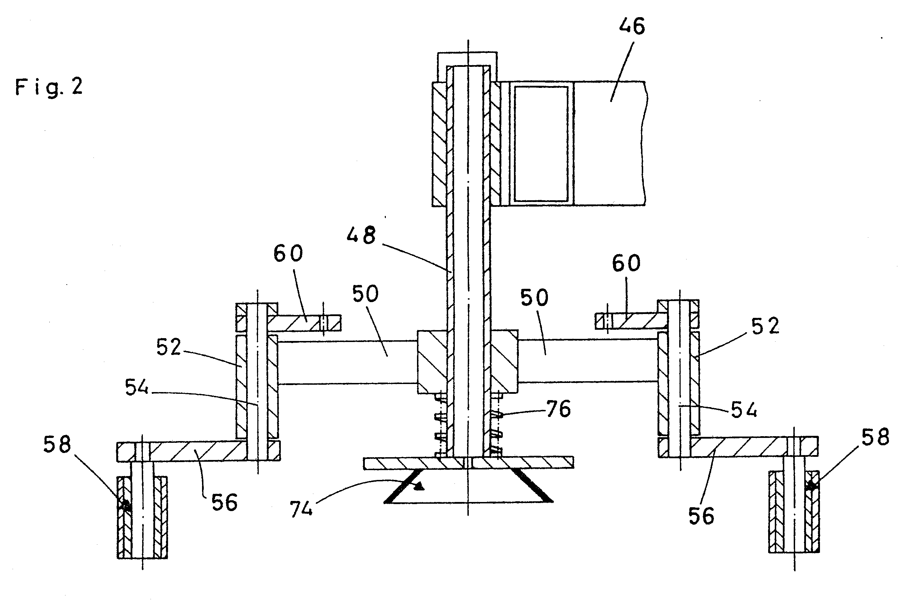

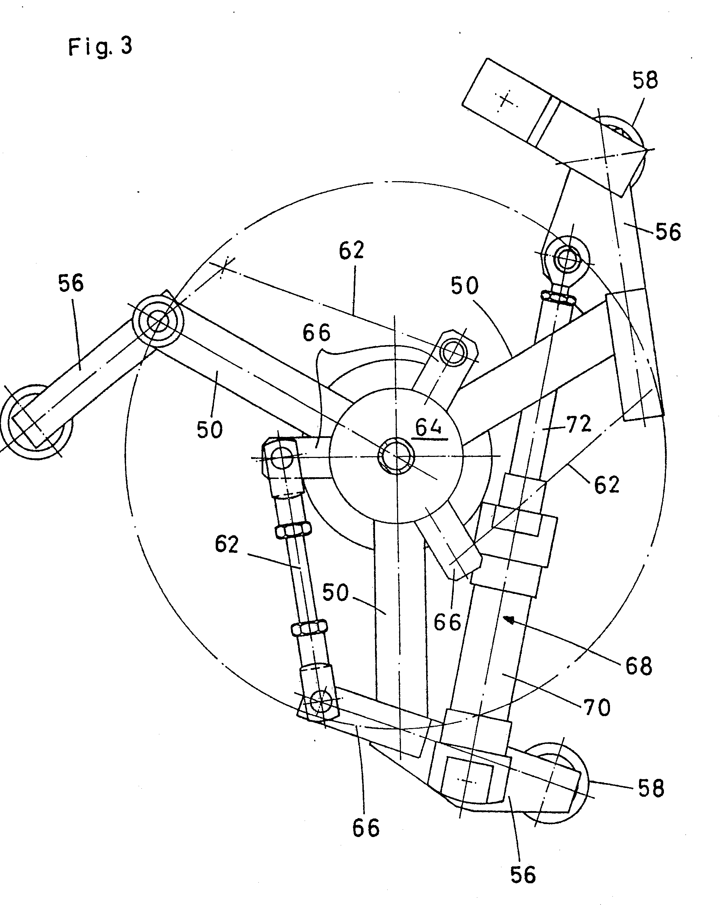

Aus Fig. 1 sind ferner die bereits angesprochenen Greiferkopfanordnungen 42 und 44 ersichtlich. Es handelt sich hier jeweils um einen Greiferstern mit jeweils vier Armen, wobei an den Enden der Arme die eigentlichen Greiferköpfe befestigt sind, die in den Fig. 2 und 3 dargestellt sind. Die Greiferköpfe sind an dem Arm 46 des Greifersternes vertikal verstellbar befestigt. Hierfür ist ein Zentralrohr 48 vorgesehen, das am Arm 46, aber axial verschieblich gelagert ist und drei um 120° versetzte Radialarme 50 aufweist. Jeder der Radialarme 50 ist an seinem Ende mit einer Lagerbüchse 52 versehen. In den Lagerbüchsen 52 sind Schwenkbolzen 54 gelagert, an deren unterem Ende Schwenkhebel 56 angeordnet sind, an denen wie in den Fig. 2 und 3 gezeigt Greifrollen 58 befestigt sind. Die Greifrollen 58 dienen dazu, eine Kapsel an ihrer Mantelfläche zu erfassen und sind mit Hilfe von Hebelarmen 60 am oberen Ende der Schwenkbolzen 54 in und aus der Anlage mit einer Kapsel verschwenkbar. Verbindungshebel 62, von denen in Fig. 3 nur einer vollständig dargestellt ist, während die anderen lediglich durch strichpunktierte Linien angedeutet sind, sind längenverstellbar und stellen die Verbindung von den Verbindungshebeln 60 zu einem Hebelstern 64 mit drei Hebelarmen 66 her. Der Hebelstern 64 ist drehbar auf dem Zentralrohr 48 befestigt. Aufgrund dieser Konstruktion ist gewährleistet, daß eine Schwenkbewegung eines der Schwenkhebel 56 zum Anlegen der Greifrolle 58 gegen die Matelfläche einer Brennkapsel zu einer entsprechenden Schwenkbewegung der anderen, die weiteren Greifrollen 58 tragenden Schwenkhebel führt. Zur Bewegung der Schwenkhebel 56 dient ein Hydraulik- oder Pneumatikzylinder 68, dessen Gehäuse 70 schwenkbar an einem Schwenkhebel 56 gelagert ist. Die Kolbenstange 72 ist schwenkbar am Schwenkhebel 56 der benachbarten Greifrolle gelagert, so daß bei einer axialen Verschiebung der Kolbenstange 72 gegenüber dem Gehäuse 70 alle Schwenkhebel, die die Greifeinrichtung für die Kapsel bilden, in einer Schwenkbewegung gemeinsam radial gegenüber der Mantelfläche der nicht gezeigten Kapsel bewegt werden. Insoweit ist der Greiferkopf aus den deutschen Patenten 26 54 445 und 27 54 617 bekannt.

Neu hingegen ist, daß das Zentralrohr 48 an seinem unteren Ende - wie in Fig. 2 gezeigt - einen Saugkopf 74 aufweist, der gegenüber den Radialarmen 50 mit Hilfe einer Feder 76 abgefedert ist. So ein Saugkopf einschließlich der zugehörigen Steuerung zum
Ergreifen eines Transportgutes ist an sich bekannt
und muß daher nicht näher beschrieben werden. Neu
hingegen ist die Verwendung eines solchen Saugkopfes
in einer Greifeinrichtung zum Ergreifen der Kapseln.

Mit der Saugeinrichtung 74 kann das keramische Gut
in der Kapsel festgehalten werden, so daß die Kapsel durchaus starken Beschleunigungen unterworfen
werden kann, ohne daß hierdurch das keramische Gut
gefährdet werden würde. Ferner kann mit dem Saugkopf 74 das keramische Gut unabhängig davon, ob
eine Kapsel erfaßt ist oder nicht, festgehalten
oder freigegeben werden.

Weitere Einzelheiten des erfindungsgemäßen Greiferkopfes gehen aus der weiteren Beschreibung der Vorrichtung der Fig. 1 hervor.

Der Greiferstern 42 in Fig. 1, der im Takt der Hebebühne des Rundspeichers in Richtung der Pfeile
jeweils um 90° gedreht wird, entnimmt nun vom Kapselstapel des Rundspeichers 16 die oberste Kapsel
mit Hilfe des in den Fig. 2 und 3 gezeigten Greiferkopfes, wobei sowohl die Kapsel selbst über die
Greifrollen 58 als auch das gebrannte Gut mit Hilfe
des Saugkopfes 54 ergriffen werden. Kapsel und gebranntes Gut werden dann in einem Schritt von 90°
zu einer Umsetzvorrichtung 80 gefördert, die aus
einem im Takt des Greifersternes 42 angetriebenen
Förderband besteht. Bei Stillstand des Förderbandes
wird die Kapsel mit dem gebranntem Gut abgesetzt, wobei nach dem Absetzen die Greiferrollen 58 die Kapsel freigeben, während der Saugkopf 74 nachwievor das gebrannte keramische Gut festhält und dieses aus der Kapsel beim Anheben des Greiferkopfes heraushebt. Im nächsten Taktschritt, bei dem gleichzeitig eine neue Kapsel vom Kapselstapel zur Umsetzvorrichtung 80 gefördert wird, wird dann das gebrannte keramische Gut zu einer Abführstation 82 in Form eines kontinuierlich angetriebenen Förderbandes gefördert, auf dem das gebrannte keramische Gut abgesetzt wird. Nach zwei weiteren Taktschritten erfaßt dann der gleiche Greiferkopf wieder eine neue Kapsel vom Kapselstapel.

Das Förderband 80 fördert in der Zwischenzeit die leeren Kapseln nacheinander zum Greiferstern 44, der genauso wie der Greiferstern 42 aufgebaut ist und in ähnlicher Weise betrieben wird. Mit Hilfe eines Greiferkopfes des Greifersterns 44 wird unter Verwendung des Saugkopfes 74 zu brennendes keramisches Gut von einer Zuführstation 84 in Form eines Förderbandes ergriffen und in einem Taktschritt zur Umsetzeinrichtung 80 gefördert, an der das keramische Gut in eine herantransportierte leere Kapsel eingesetzt wird. Daraufhin treten zusätzlich zum Saugkopf 74 die Greifrollen 58 in Wirkung und erfassen eine Kapsel, die im nächsten Taktschritt zusammen mit dem zu brennendem keramischen Gut zum Rundspeicher 18 gefördert wird. Dort wird die Kapsel mit zu brennendem Gut auf den bereitstehenden Kapselstapel abgesetzt, wozu natürlich die Greifrollen 58 und der Saugkopf 74 außer Wirkung treten müssen. Dann wird die Hebebühne um eine Kapselhöhe abgesenkt, so daß der Kapselstapel zur Aufnahme der nächsten anstehenden Kapsel bereit ist. Hat der Kapselstapel seinen vorgeschriebenen Umfang erreicht, wird er auf dem Drehtisch um einen Schritt weiterbewegt, so daß Platz zur Bildung des nächsten Kapselstapels auf dem Drehtisch geschaffen wird. Dabei fängt natürlich die Hebebühne in der obersten Stellung an und wird wieder schrittweise abgesenkt.

Wie man sieht, liegen die Verhältnisse am Rundspeicher 18 umgekehrt zu denen, die am Rundspeicher 16 auftreten.

Anstelle eines vollautomatischen Betriebes, wie er in Fig. 1 gezeigt und durch die Zuführstation 84 möglich ist, kann auch ein halbautomatischer Betrieb dergestalt vorgesehen werden, daß das zu brennende Gut von Hand in die leeren, auf der Umsetzvorrichtung 80 transportierten Kapseln eingesetzt wird. Diese Bedienungsperson übernimmt dann gleichzeitig eine Qualitätskontrolle sowohl hinsichtlich der leeren Kapseln als auch hinsichtlich des zu brennenden Gutes und kann fehlerhafte Stücke sofort austauschen bzw. entfernen.

Ferner ist es möglich, an der Umsetzvorrichtung 80 vor der Zuführung von zu brennendem Gut eine Kapselputzvorrichtung anzuordnen.

Ansprüche

1. Vorrichtung zum Füllen und Entleeren von Kapseln für keramisches Gut sowie zum gleichzeitigen Stapeln und Entstapeln der Kapseln, bei der ein Kapselstapel mit gebranntem Gut sowie ein Kapselstapel mit zu brennendem Gut jeweils auf einem taktweise zur Konstanthaltung der Höhenlage der jeweils obersten Kapseln heb- und senkbaren Hebebühne angeordnet sind und welche eine die beiden Hebebühnen verbindende Umsetzvorrichtung zur Umsetzung der Kapseln vom Stapel mit gebranntem Gut zum Stapel mit zu brennendem Gut sowie eine erste Fördervorrichtung zur Förderung des zu brennenden Gutes von einer Zuführstation zum entsprechenden Kapselstapel und eine zweite Fördervorrichtung zur Förderung des gebrannten Gutes vom entsprechenden Kapselstapel zu einer Abführstation umfaßt, wobei die Fördervorrichtungen mindestens je einen heb- und senkbaren Greiferkopf aufweisen und die Zuführ- und Abführstationen etwa in Höhe der obersten Kapsel eines Stapels angeordnet sind, dadurch gekennzeichnet, daß die Umsetzvorrichtung (80) ein Förderband od. dgl. umfaßt und daß der Greiferkopf der ersten Fördervorrichtung (44) von der Umsetzvorrichtung (80) mit zu brennendem Gut gefüllte Kapseln zum entsprechenden Kapselstapel fördert und der Greiferkopf der zweiten Fördervorrichtung (42) vom Kapselstapel mit gebranntem Gut Kapseln mit gebranntem Gut zur Umsetzvorrichtung (80) fördert, die Kapseln dort absetzt und von der Umsetzvorrichtung das gebrannte Gut weiter zur Abführstation (82) fördert.

2. Vorrichtung nach Anspruch 1 oder 2, dadurch gekennzeichnet, daß das Förderband (80) der Umsetzvorrichtung eine Kapselputzstation für die leeren Kapseln durchläuft.

3. Vorrichtung nach einem der Ansprüche 1 bis 2, dadurch gekennzeichnet, daß die Zuführstation (84) in Förderrichtung der ersten Fördereinrichtung (44) vor der Umsetzvorrichtung (80) vorgesehen ist und der Greiferkopf der ersten Fördereinrichtung (44) zuerst das zu brennende Gut von der Zuführstation (84) zur Umsetzvorrichtung (80) fördert und dort in eine leere Kapsel einsetzt und dann die Kapsel mit dem zu brennendem Gut zum entsprechenden Stapel fördert.

4. Vorrichtung nach Anspruch 1 oder 2, dadurch gekennzeichnet, daß die Zuführstation an der Umsetzvorrichtung (80) vorgesehen ist.

5. Vorrichtung nach einem der Ansprüche 1 bis 4, dadurch gekennzeichnet, daß die heb- und senkbaren Greiferköpfe an den Armen von im Takt der Hebebühnen (26) um vertikale Achsen (22) rotierenden Greifersternen (43, 44) angeordnet sind.

6. Vorrichtung nach einem der vorhergehenden Ansprüche, dadurch gekennzeichnet, daß an jeder Hebebühne (26) eine taktweise angetriebene Speicher- und Transportvorrichtung (16, 18), vorzugsweise mit einer in sich geschlossenen Förderbahn, vorgesehen ist, auf der mehrere Stapel gleichzeitig gespeichert und nacheinander über die Hebebühne transportiert werden.

7. Vorrichtung, insbesondere nach Anspruch 6, dadurch gekennzeichnet, daß die Speicher- und Transportvorrichtung (16, 18) einen ringförmigen Drehtisch mit Durchbrechungen (28) in der Tischplatte (20) aufweist an den Stellen, an denen die Stapel (30) zu liegen kommen, wobei die stationär angeordnete Hebebühne (26) beim Anheben oder Absenken durch die Durchbrechungen (28) im Drehtisch hindurchgreifen kann.

8. Vorrichtung nach Anspruch 7, dadurch gekennzeichnet, daß über den Durchbrechungen (28) auf die Tischplatte (20) ortsgenau absetzbare Paletten (38) zur Aufnahme der Stapel (30) vorgesehen sind, wobei die Paletten (38) verstellbare Zentriereinrichtungen (40) für die Stapel aufweisen.

9. Vorrichtung, insbesondere nach einem der Ansprüche 1 bis 8, wobei der Greiferkopf mindestens drei etwa im gleichen Winkelabstand voneinander angeordnete, an die Mantelfläche der Kapsel anlegbare Greifglieder aufweist, dadurch gekennzeichnet, daß etwa in der Mitte des Greiferkopfes ein auf und ab verschiebbares,
an das keramische Gut in der Kapsel anlegbares
Halteglied (74) vorgesehen ist.

10. Vorrichtung nach Anspruch 9, dadurch gekennzeichnet, daß das Halteglied federnd auf dem
    keramischen Gut aufliegt.

11. Vorrichtung nach Anspruch 9 oder 10, dadurch
    gekennzeichnet, daß das Halteglied einen Saug-
    kopf (74) umfaßt.

Fig. 1

Fig. 2

46

48

60

50

50

60

52

52

54

54

76

58

56

56

58

74

Fig. 3

Fig. 4

Fig. 5

# 0119522
Nummer der Anmeldung

## EUROPÄISCHER RECHERCHENBERICHT

| | EINSCHLÄGIGE DOKUMENTE | | EP 84102172.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | AT - A - 361 367 (MASCHINEN....) <br> * Seite 6, Zeilen 34-36 * <br> -- | 1 | B 65 G 47/52 |
| A | DE - A - 1 808 749 (GEBR. NETSCH) <br> * Seite 8, Zeilen 25-30 * <br> ---- | | |

**RECHERCHIERTE SACHGEBIETE (Int. Cl. ³)**

B 28 B
B 65 G
F 27 D

Der vorliegende Recherchenbericht wurde für alle Patentansprüche erstellt.

| Recherchenort | Abschlußdatum der Recherche | Prüfer |
|---|---|---|
| WIEN | 08-06-1984 | GLAUNACH |